# EUROPEAN PATENT SPECIFICATION

(11) **EP 2 496 385 B1**
(45) Date of publication and mention of the grant of the patent: **31.12.2014**
(21) Application number: 09752791.5
(22) Date of filing: 06.11.2009
(51) Int. Cl.: B23Q 3/06, B25B 11/00, B23Q 3/08, F15B 21/06

(54) **DEVICE AND METHOD FOR FIXING PARTS**
VORRICHTUNG UND VERFAHREN ZUR REPARATUR VON TEILEN
DISPOSITIF ET PROCÉDÉ POUR FIXER DES PIÈCES

(43) Date of publication of application: 12.09.2012
(73) Proprietor: FUNDACIÓN TECNALIA RESEARCH & INNOVATION, 20009 San Sebastian (Guipuzcoa) (ES); Aciturri Metallic Parts, S.L., 09200 Miranada de Ebro Burgos (ES); SC Intreprinderea Metalurgica Pentru Aeronautica Metav SA, 013981 Bucharest (RO)
(72) Inventor: RODRÍGUEZ MIJANGOS, María, de la O, E-20009 Donostia (San Sebastián) (ES); COLLADO JIMÉNEZ, Valentín, E-20009 Donostia (San Sebastián) (ES); PORRAS TORROBA, Ester, E-01218 Berantevilla (Alava) (ES); MAZQUIARÁN PINEDA, Carlos, E-01218 Berantevilla (Alava) (ES); BARLADEANU, Mihail, R-013981 Bucharest (RO); IONESCU, Maria, R-013981 Bucharest (RO); MAY, Christopher, 66123 Saarbrücken (DE); HOLZ, Benedikt, 66123 Saarbrücken (DE); WÜRTZ, Thomas, 66123 Saarbrücken (DE); GERLACH, Thomas, 80686 Munich (DE); TRENDLER, Alexandra-Maria, 80686 Munich (DE); BOESE, Holger, 80686 Munich (DE)
(74) Representative: Carpintero Lopez, Francisco
(86) International application number: PCT/EP2009/064755
(87) International publication number: WO 2011/054393

(56) References cited:
- WO-A1-2006/074650
- DE-A1- 2 357 672
- DE-A1- 10 352 037
- DE-A1- 19 654 864
- SU-A1- 1 007 901
- US-A- 2 770 823
- US-A1- 2006 252 354

## Description

### Technical Field of the Invention

The present invention relates to a device for fixing parts (non magnetic parts), having an application in the parts machining industry, and more specifically in the area of the machining of different parts with a complex geometry and large dimensions.

### Background of the Invention

Given the demands and needs in modern industry today, the time used as well as the associated cost in performing the securing, fixing or immobilization of parts in machining equipment is a determining factor in parts manufacturing, especially for achieving flexible production, in which flexible manufacturing involving very fast production of a wide variety of parts in small production batches is increasingly required.

This factor is even more important when dealing with parts which are difficult to handle, position and secure in the machining equipment, due to the fact that they have geometries with complex curves, non-rigid surfaces or they are simply structures that are weak against machining or do not have reference faces.

There are currently several devices which allow fixing or gripping parts by means of the use of fluids usually referred to as magneto-rheological fluids. Rheology is a field of physics which involves the relationship that exists between stress and deformation in materials having the capacity to flow.

Magneto-rheological fluids are suspensions of minute iron particles uniformly distributed in a liquid medium, usually mineral oil or silicone which, in liquid state, have the consistency of viscous oil. When a magnetic field is applied, the iron particles are distributed in fractions of a second according to the lines of said field and thus modify the mechanical behavior of the fluid. As the intensity of the magnetic field increases, these fluids are transformed into a solid gel-type mass.

Given their characteristics, for applications in the fixing of parts, magneto-rheological fluids adapt to the small geometric variations or fluctuations that the parts may have, such that they can be used to apply uniform fixing forces, even in parts having large surfaces, compensating for the dimensional inaccuracies or changes in shape that the parts may have. Furthermore, magneto-rheological fluids absorb the vibrations which, for example, are produced while performing machining operations, such as milling, without said vibrations being transmitted to the part, which allows processing very small parts with great precision, for which reason the use of these fluids for fixing parts during their machining is widespread in the field of parts of timepieces.

German patent application number DE-10209783-A1 describes a method and a device for holding, positioning and gripping small parts, for example in the field of the timepiece industry, medical technology or microelectronics, by means of the use of a rheological fluid as a holding means. To that end, a portion of the part is introduced in the fluid which is housed in a container, such that a distance of less than 5 mm is maintained between the part and the walls of the container. Given the small size of the parts it is possible to create a magnetic field traversing the fluid and the container from one side to the other. However, the main drawback of this device is that in the event that the distance between the ends of the container is greater than 50 mm, the value of the magnetic flux is very weak and, therefore, the fixing force is not large enough to keep it immobilized, so said device and method are of no use with parts having a size of more than 50 mm.

On the other hand, German patent application number DE-10352037-A1 and the international application number WO-2006/074650-A1 describe fixing devices for irregular parts comprising an elastic cushion hermetically containing a magneto-rheological fluid, in which said elastic cushion projects from the frame of the tool. The drawback of these devices is that they are not able to withstand large shear stresses without the part moving during the machining process. Nor do the devices contemplate means for the proper positioning and orientation of the part in a certain fixing position, the actual surface of the elastic cushion, which adapts to the shape of the part, being what determines in a non-controlled manner the final orientation and the position of the part.

British patent application number GB-2317157-A describes a gripping device by means of a electro-rheological fluid, in which the ER fluid is not in direct contact with the part to be held or with the element generating the magnetic field, comprising a grip the function of which is to move an object from one position to another, in which the part is not subjected to large machining stresses.

US patent numbers US-6267364-B1, US-6647611-B2 and US-6182954-B1 describe devices for holding parts by means of magneto-rheological fluids, consisting of very complex devices in which the parts are positioned inside a container housing the magneto-rheological fluid by means of positioning screws which are designed to exert a minimal force on the part, in order to keep it in the required position and orientation during machining without damaging it. The drawback of these devices is that they do not allow machining large complex parts which are subjected to large stresses during their machining, given that they do not have the capacity to keep said parts in their fixing position during machining. In these patents, as well as in the German patent DE 10209783-A1, the magnetic field traverses the fluid and the container from one side to the other. This configuration only allows the fixing of small parts with high holding forces or medium sized parts with small forces.

Finally German patent De 10244867- A1 describes a device for fixing and positioning parts using magneto-rheological fluids. The device comprises a container for the MR fluid and the part is partially introduced in the MR fluid without direct contact with the container. There is no indication in the patent of the magnetic field needed to hold a large part subjected to large stress during machining operations.

Some other devices in the state of the art, similarly to that discussed above, are disclosed in United States Patent No. US-2770823-A, German Patent Applications No. DE-2357672-A1 and DE-19654864-A1, and Soviet Union Patent Application No. SU-1007901-A1.

Therefore, and especially in fields which are subject to very high costs, such as the aeronautical and aerospace industry for example, there is an enormous need to have suitable, secure and fast and securing means which allow firmly fixing parts with complex geometries and large dimensions during their machining, whatever their geometry and mechanical characteristics may be, also allowing their fast and unequivocal positioning and orientation in a determined fixing position.

### Description of the Invention

A first aspect of the present invention relates to a device for fixing parts, which allows immobilizing, supporting and keeping parts with a complex geometry and large dimensions firmly fixed in place, without said parts needing to have reference faces, keeping them immobilized by means of the use of a magneto-rheological fluid while intense machining operations are being performed on them, in which operations the part is subjected to large stresses.

The device of the invention has a particular application in the machining, specifically in milling, of structural elements such as aeronautical T-shaped titanium stringers, in which high precision and firm fixing are required, while at the same time special care is also required so as to not damage the part as a consequence of said fixing.

The device for fixing parts proposed by the invention propone comprises a magnetic generating element, which can consist of an electromagnet or magnetic plate, configured to generate magnetic flux, in which said magnetic generating element has an upper surface.

The device also comprises a container which does not have a lid or bottom and which is formed only by substantially vertical walls. Said container is tightly secured on the upper surface of the magnetic generating element.

The device comprises a magneto-rheological fluid which has a high yield point located directly above the upper surface of the magnetic generating element. The magneto-rheological fluid is laterally contained by the container forming a layer intended to be a bubble-free layer. In turn, the magnetic generating element has the capacity to generate a magnetic flux in the magneto-rheological fluid greater than 100 mT, which causes the immobilization or the fixing of a part located partially submersed in said magneto-rheological fluid, while machining operations are performed on the upper non-submersed portion of the part. According to the invention, and unlike the devices of the state of the art, the device can fix parts that are several meters long, withstanding forces greater than 1000 N.

The magneto-rheological fluid is thus in direct contact with the part to be fixed, without there being air pockets in said fluid, which would reduce the holding capacity of the device as well as the uniformity of the magnetic flux acting on said fluid, and therefore on the part.

The magneto-rheological fluid increases its mechanical resistance in fractions of a second under the action of a magnetic field, securely fixing the part but without damaging it.

The fact that the fluid is in direct contact with the magnetic generating element allows achieving high magnetic fluxes in the fluid that are sufficient to withstand the shear stresses, which is not possible when the fluid is housed in a vessel with bottom, like in most of the devices from the state of the art.

In the case of the invention, the fluid is in direct contact with the magnetic plate, such that there is very little distance, preferably less than 5 mm, between the magnets of the magnetic generating element and the magneto-rheological fluid, although the possibility that there is a coating layer of the magnets between the magneto-rheological fluid and the magnets is also contemplated, although the distance between the magnets and the magneto-rheological fluid must in any case be less than 2 mm.

Therefore, by means of the device of the invention it is achieved that the magnetic field is closed through the magneto-rheological fluid. In the event that the container has a bottom, a gap would be established between said container and the magnetic generating element which would reduce the magnetic field. In the case of the invention, gaps, such as air pockets, do not occur at any point between the part and the fluid, or between the fluid and the magnetic generating element.

The device of the invention can thus fix very long parts, several meters long, which have low rigidity, without damaging them, which parts do not have reference faces, parts made of non-magnetic materials such as aluminium and parts made of materials to which large forces cannot be applied because they would cause permanent deformations in the material as a consequence of the fixing, as in the case of titanium due to the memory effect of this material.

When a part is fixed by immersion in the magneto-rheological fluid, the main stresses that occur are shear stresses, as well as compression and traction loads. In order to securely fix and support parts with large dimensions, the magneto-rheological fluid must have a high resistance and particularly a high yield point, which determines the force which must be applied to produce the flow of the material.

In the case of the invention, given that the magneto-rheological fluid has a high yield point, only a small area or portion of the part must be submersed in the fluid, whereby increasing the area available for being machined. Depending on the geometry of the part and on the degree of immersion, traction and compressive stresses of different values act in the magneto-rheological fluid, in addition to the shear stresses, so it is necessary to have a high density of the magnetic flux in the area located under the part, i.e., in the area of the fluid located beneath the part.

The magnetic generating element preferably consists of at least one electromagnet in which the magnetic field is electrically activated, which allows generating magnetic fields with high values, being compact elements at the same time for being integrated in the device, which can also be manufactured in large dimensions. Furthermore, the electromagnets are easy to use, and the magnetic field can be activated and deactivated by simply pushing a switch.

Nevertheless, it is also contemplated that the magnetic generating element consists of a mechanically activated magnet capable of generating a high density of the magnetic flux.

The possibility that the device is configured to position and fix a part, which is partially submersed in the magneto-rheological fluid, in which said part has a lower surface with a configuration coinciding with the upper surface of the magnetic generating element, in which the distance between said lower surface of the part and the upper surface of the magnetic generating element is less than approximately 5 mm, i.e., the thickness of the layer of magneto-rheological fluid is less than 5 mm, is contemplated. In such case, if the lower surface of the part to be fixed is planar, the upper surface of the magnetic generating element is planar, whereas if the lower surface of the part to be fixed is cylindrical, the upper surface of the magnetic generating element is cylindrical.

In order to achieve the maximum magnetic flux in the magneto-rheological fluid, said fluid is in direct contact with the magnetic generating element and the thickness of the layer of magneto-rheological fluid is as small as possible, less than 5 mm, such that the geometry of the device, i.e., the upper surface of the magnetic generating element, is very similar to the geometry of the part to be fixed.

This makes the magnetic field greater because if there is a lot of fluid, the magnetic field does not completely penetrate and the forces achieved are lower.

The possibility that the container is made of a magnetic material is also contemplated in order to maximize the force generated in the magneto-rheological fluid. Therefore, the flux lines are closed through the container, increasing the magnetic flux in the sides of the part, given that the circulation of the magnetic flux through the container is allowed, whereby achieving magnetic sealing in the surface of the magneto-rheological fluid.

According to a preferred embodiment the container has a geometry in plan view similar to the geometry in plan view of the part to be fixed, the geometry in plan view of the container being greater, preferably by no more than 10 mm, than the geometry in plan view of the part to be fixed.

The possibility that the device comprises at least one reference mobile element or pin configured to adapt the geometry in plan view of the container to the geometry in plan view of the part to be fixed, allowing placing the part in a desired fixing position and orientation for performing the machining operations, is contemplated.

It is thus achieved that the container is able to adapt to different profiles, with different lengths and cross sections. To that end, it is also contemplated that the container can comprise several parts or portions which can be assembled in different positions. The device can also comprise several parts or portions assembled in one and the same position, in addition to the elements or plates of the container, which allows adapting said container to the length of the part to be fixed.

From a magnetic point of view, the height of the mobile reference elements is as small as possible. The part can be supported by mobile reference elements which are arranged directly on the upper surface of the magnetic generating element. In such case, the height of the mobile reference elements is the same as the width of the layer of magneto-rheological fluid, i.e., the distance between the part and the magnetic generating element.

In addition to the mobile reference elements, the part can be positioned by means of reference devices which can consist of two parts located in lateral opposition, one of them being a pin it abuts with and the other one a mobile positioning element or thruster, the position of which can be adjusted against the part, both being able to be threaded to the magnetic generating element.

It is thus achieved that the device has a flexible configuration which allows a fast change for the manufacture of a plurality of part lengths and sections in which the assembly and disassembly of the pins are easily performed.

The possibility that the magnetic generating element has the capacity to generate a plurality of independent magnetic fluxes very close to one another in the magneto-rheological fluid, such that said magnetic fluxes are conducted through the magneto-rheological fluid and closed in the magnetic generating element, is also contemplated.

In the event that the width of the part is too large, greater than 50 mm, to be able to generate a continuous magnetic field traversing all of said width, a plurality of independent magnetic fluxes which are very close to one another is created by means of the device of the invention, the field lines of which start from the magnetic generating element, traverse the magneto-rheological fluid and end or finish in the actual magnetic generating element.

The possibility that the magnetic generating element comprises a fixed plate of non-magnetic material with a thickness not greater than 2 mm, and a mobile plate of non-magnetic material which has inserted therein a plurality of permanent magnets in which the upper face of the fixed plate is in contact with the magneto-rheological fluid and the mobile plate is located on at least one hydraulic cylinder capable of moving said mobile plate, is contemplated.

Likewise, depending on the type and the value of the forces to be withstood while the part is machined, it may be necessary to use a magnetic flux regulating device, also called pole adapter, for the purpose of increasing the density of magnetic flux in an area located below the fixed part. The magnetic flux regulating device allows changing the direction of the poles by 90º, reducing the distance between the poles of the magnetic field by more than 50 % for a pair of poles, in addition to providing a sort of magnetic seal in the sides of the part.

The smallest distance between poles in commercial magnetic plates is too large (i.e. 50 mm for a pair of poles) and said distance cannot be reduced because containing the necessary windings for activating and deactivating the plate or magnetic generating element is required.

A second aspect of the invention relates to a method for fixing parts comprising using a device such as the one described above. The method comprises:
- arranging a layer of magneto-rheological fluid having a high yield point directly on the upper surface of the magnetic generating element inside the container,
- positioning the partially submersed part to be fixed in direct contact with the magneto-rheological fluid, with the aim of preventing bubbles from remaining between the part to be fixed and the magneto-rheological fluid, such that the distance between the lower surface of the part and the upper surface of the magnetic generating element is less than approximately 5 mm, and
- generating a magnetic flux in the magneto-rheological fluid with a value greater than 100 mT.

### Description of the Drawings

To complement the description which is being made and for the purpose of aiding to better understand the features of the invention according to a preferred practical embodiment thereof, a set of drawings is attached as an integral part of said description, in which the following has been depicted with an illustrative and non-limiting character:
Figure 1 shows a schematic view, according to a cross-section, of the device of the invention, in which the magnetic field flux lines have been depicted by means of arrows.
Figure 2 shows a schematic view like that of Figure 1, in which two reference mobile elements located inside the part as well as two mobile positioning elements located laterally to the part have been depicted.
Figure 3 shows a schematic view like that of Figures 1 and 2, in which a plurality of reference mobile elements and a single mobile positioning element located laterally have been depicted.
Figure 4 shows a perspective partial schematic view of the device of the invention, in which a part with intermediate dimensions in a fixing position has been depicted.

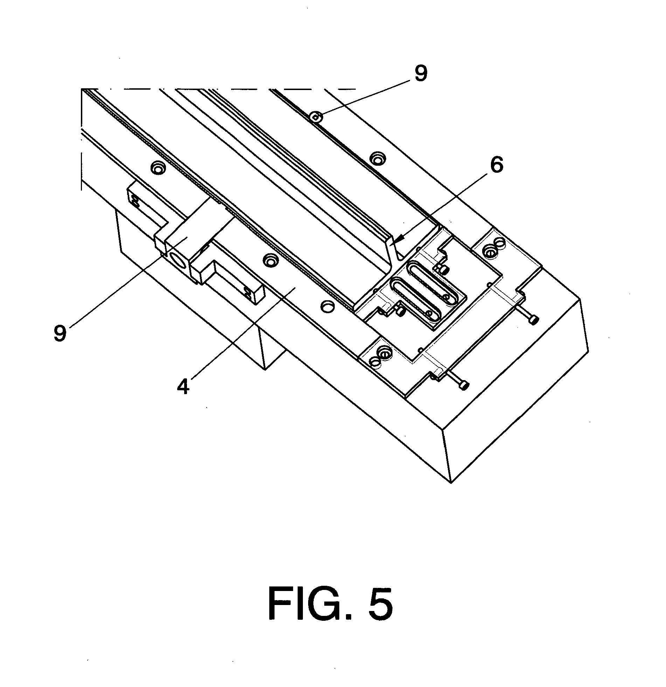

Figure 5 shows a partial schematic view like that of Figure 4, in which a part in a fixing position has been depicted, the length of which is virtually the maximum part length that the device can fix.

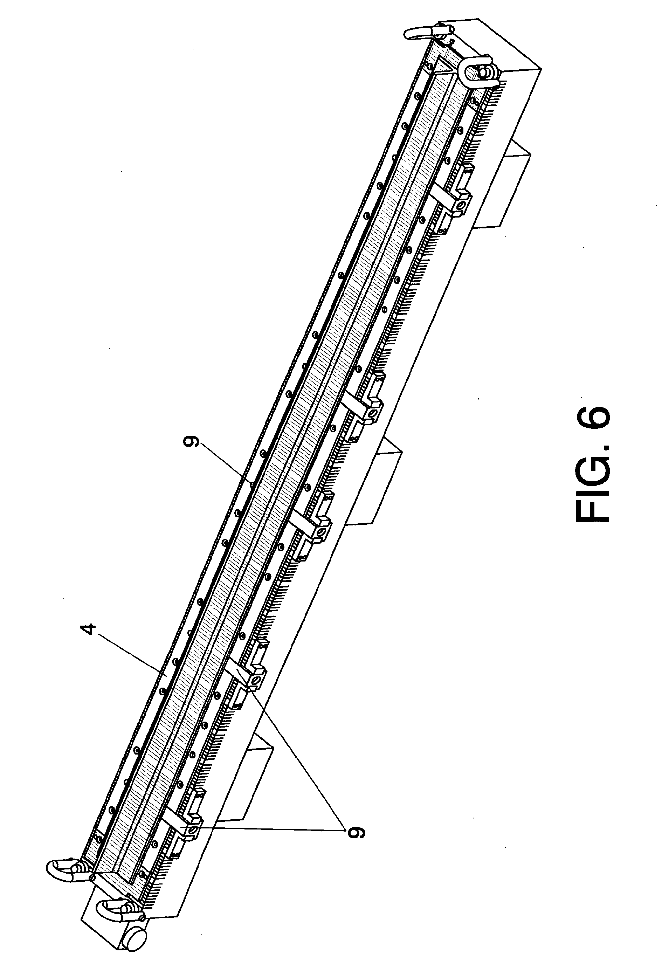

Figure 6 shows a perspective general schematic view of the device of the invention.
Figure 7 shows an exploded schematic view of an embodiment of the magnetic generating element comprising a fixed plate of aluminium and a mobile plate of non-magnetic material which has inserted therein a plurality of permanent magnets and is driven by a plurality of hydraulic cylinders.
Figure 8 shows a schematic view, according to a cross-section at the height corresponding to a hydraulic cylinder, of the device of the invention with the magnetic generating element of the embodiment depicted in Figure 7, in which a part in the fixing position has been depicted.
Figure 9 shows a detail of Figure 8.
Figure 10 shows a partial schematic view of an embodiment variant of the device comprising a magnetic flux regulating device (pole adapter).
Figure 11 shows a schematic cross section of a conventional magnetic plate in a demagnetized status.
Figure 12 shows a schematic cross section of a conventional magnetic plate in a magnetized status.

### Preferred Embodiment of the Invention

In view of the mentioned figures, it can be observed how in one of the possible embodiments of the invention, the device for fixing parts proposed by the invention comprises a magnetic generating element (1) configured to generate magnetic flux (2), in which said magnetic generating element (1) has an upper surface (3).

The device comprises a container (4), the surface in plan view of which has a length of the order of several meters, of a magnetic material which is only formed by vertical walls and is tightly secured on the upper surface (3) of the magnetic generating element (1).

The device comprises a magneto-rheological fluid (5) having a high yield point located directly on the upper surface (3) of the magnetic generating element (1) and being laterally contained by container (4) forming a bubble-free layer.

It is understood that the magneto-rheological fluid (5) has a high yield point insofar as said magneto-rheological fluid (5) is capable of withstanding stresses under compression loads of an order of 200 kPa and under traction loads of an order of 70 kPa under a magnetic flux (2) of 400 mT.

The magnetic generating element (1) has the capacity to generate a magnetic flux (2) in the magneto-rheological fluid (5) greater than 100 mT, which causes the immobilization or the fixing of a part (6) consisting of an aeronautical T-shaped titanium stringer located in a partially submersed manner in said magneto-rheological fluid (5), while milling operation are performed on the non-submersed portion of said part (6).

The magneto-rheological fluid (5) is in direct contact with the magnetic generating element (1), such that the depth of magneto-rheological fluid (5) is less than 5 mm between the magnetic generating element (1) and the part (6).

According to a preferred embodiment, the magnetic generating element (1) consists of an electromagnet in which the magnetic field is electrically activated, which allows generating magnetic fields with high values.

Therefore, the device is configured to position and fix a part (6), which is partially submersed in the magneto-rheological fluid (5), in which said part (6) has a lower surface (7) with a configuration coinciding with the upper surface (3) of the magnetic generating element (1), in which the distance between said lower surface (7) of the part (6) and the upper surface (3) of the magnetic generating element (1) is less than approximately 5 mm.

Likewise, according to a preferred embodiment, the container (4) has a geometry in plan view similar to the geometry in plan view of the part (6) to be fixed, the geometry in plan view of the container (4) being greater by no more than 10 mm the geometry in plan view of the part (6) to be fixed.

The device comprises a plurality of reference mobile elements (8) configured to regulate the distance between said lower surface (7) of the part (6) and said upper surface (3) of the magnetic generating element (1).

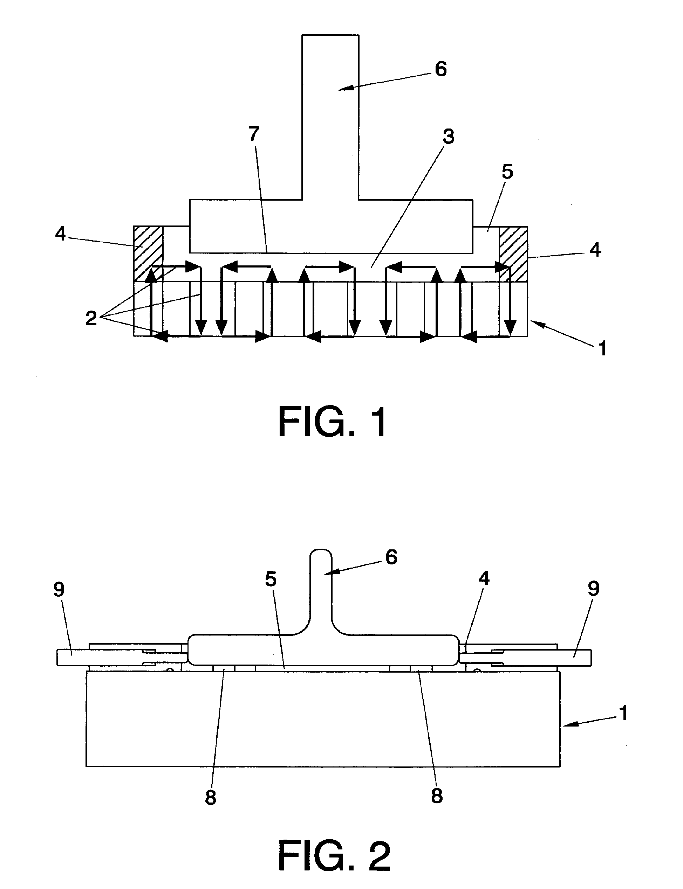

As can be schematically seen in Figure 1, the magnetic generating element (1) has the capacity to generate a plurality of independent magnetic fluxes (2) very close to one another in the magneto-rheological fluid (5), such that said magnetic fluxes (2) are conducted through the magneto-rheological fluid (5) and closed in the magnetic generating element (1).

In the event that the width of the part (6) is too large, greater than 50 mm, to be capable of generating a continuous magnetic field traversing all of said width, by means of the device of the invention a plurality of magnetic fluxes (2) which are independent but very close to one another is created, the field lines of which start from the magnetic generating element (1), traverse the magneto-rheological fluid (5) and end or finish in the actual magnetic generating element (1).

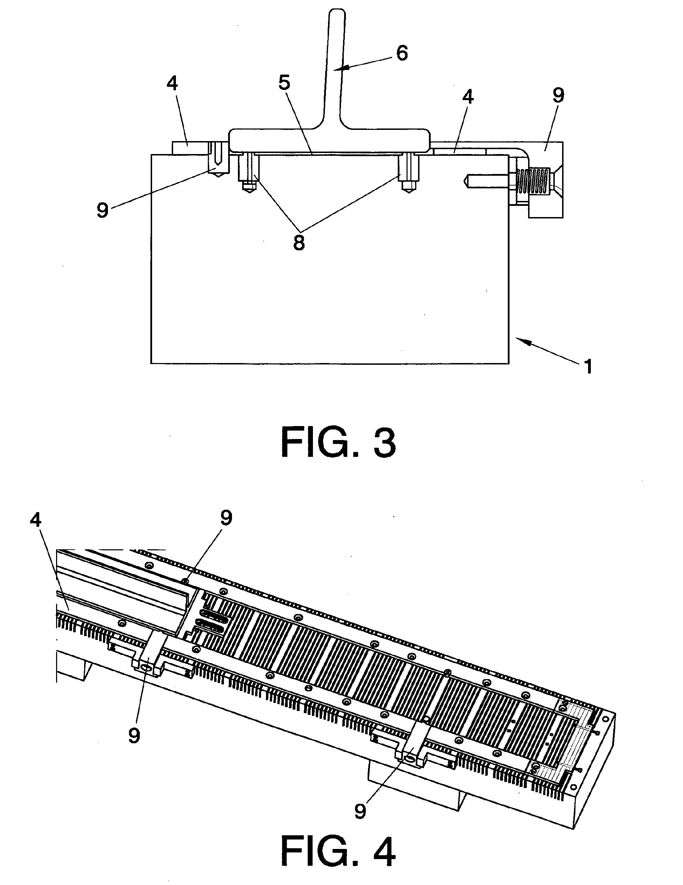

Likewise, as can be seen in Figure 3, the device comprises a reference mobile positioning element (9) for positioning and orienting the part (6) to be fixed in a predetermined position in the device, allowing placing the part (6) in a desired fixing position and orientation for performing the machining operations.

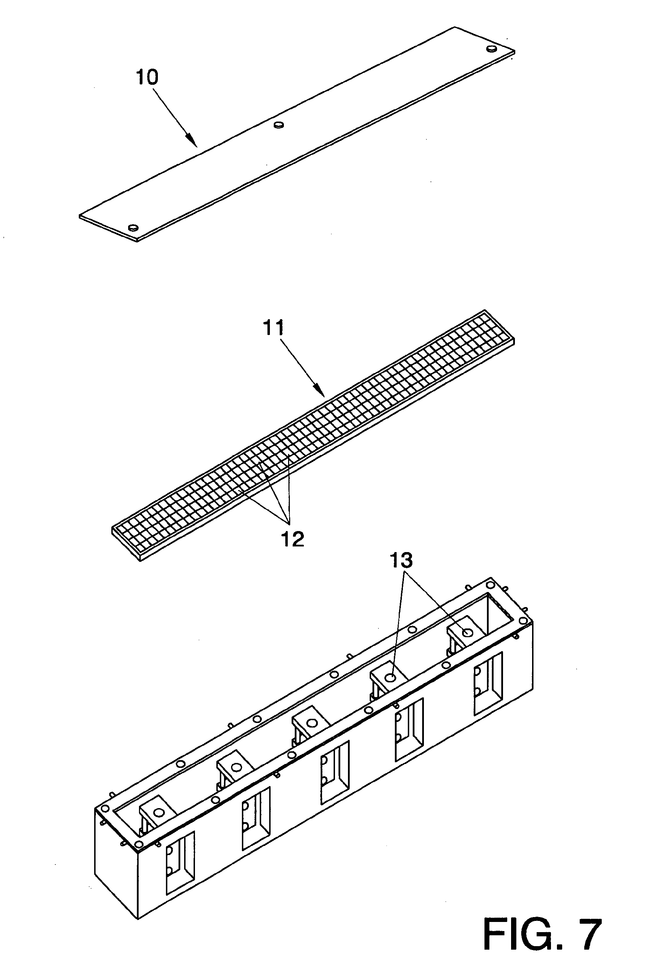

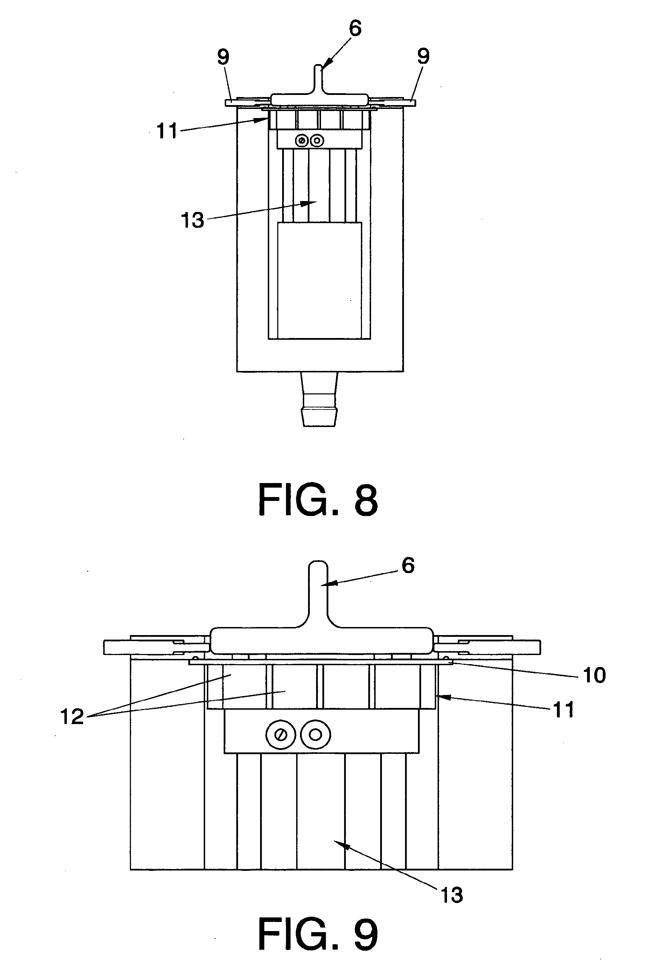

On the other hand, according to the embodiment variant depicted in Figures 7 to 9, the magnetic generating element (1) comprises a fixed plate (10) of non-magnetic material, aluminum in the present embodiment, with a thickness not greater than 2 mm, and a mobile plate (11) of non-magnetic material which has inserted therein a plurality of permanent magnets (12) in which the upper face of the fixed plate (10) is in contact with the magneto-rheological fluid (5) and the mobile plate (11) is located on at least one hydraulic cylinder (13), preferably a plurality, capable of moving said mobile plate (11). In this case, the magnetic field in the magneto-rheological fluid can be regulated by changing the distance between the mobile plate (11) and the fixed plate (10) by means of the hydraulic cylinder (13).

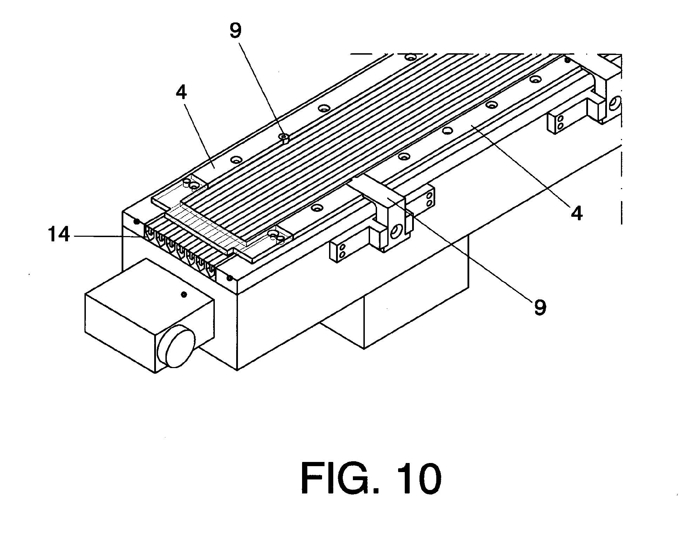

Likewise, as has been depicted in the variant depicted in Figure 10, the device comprises a magnetic flux regulating device (14), for the purpose of increasing the density of magnetic flux in an area located below the fixed part (6). The magnetic flux regulating device (14) allows changing the direction of the poles by 90º, reducing the distance between the poles of the magnetic field by more than 50 % for a pair of poles, in addition to providing a sort of magnetic seal in the sides of the part (6). For example using a magnetic plate 1414mm length and 135 mm wide the distance between the poles can be reduced to approximately 12 mm.

Therefore, according to said embodiment the magnetic generating element (1) comprises the magnetic flux regulating device (14) the function of which is to concentrate the magnetic flux (2) in the area located below the part (6) to be fixed. The magnetic flux regulating device (14) changes the direction of the magnetic flux (2) by 90º and allows reducing by more than 50% the distance between poles. The magnetic flux regulating device (14) has the capacity to transmit and increase the plurality of independent magnetic fluxes (2) generated by the magnetic generating element (1), conducting through the magneto-rheological fluid (5) and closing them in the magnetic generating element (1).

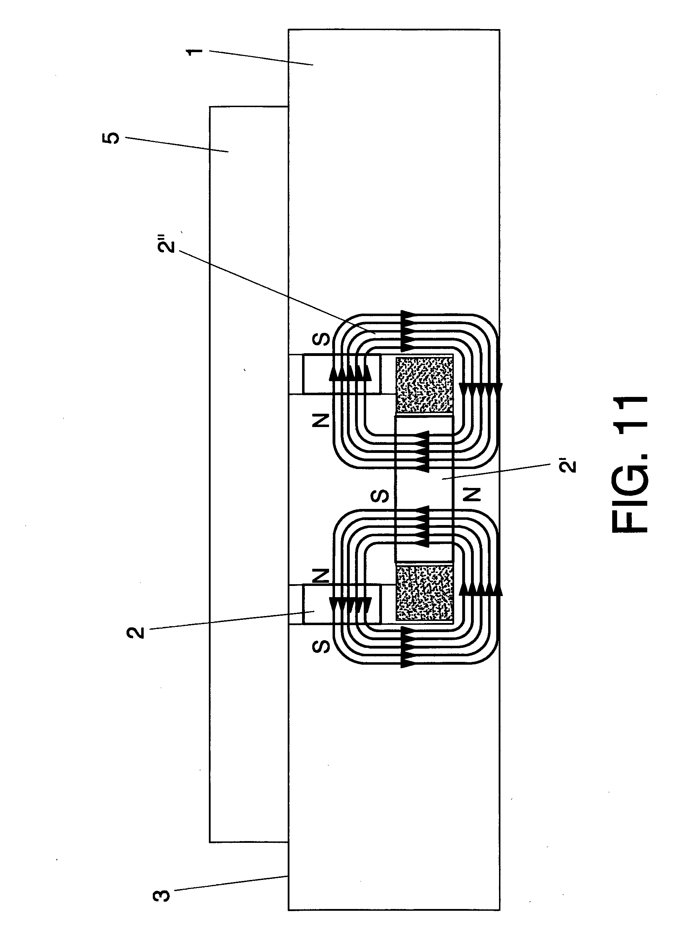

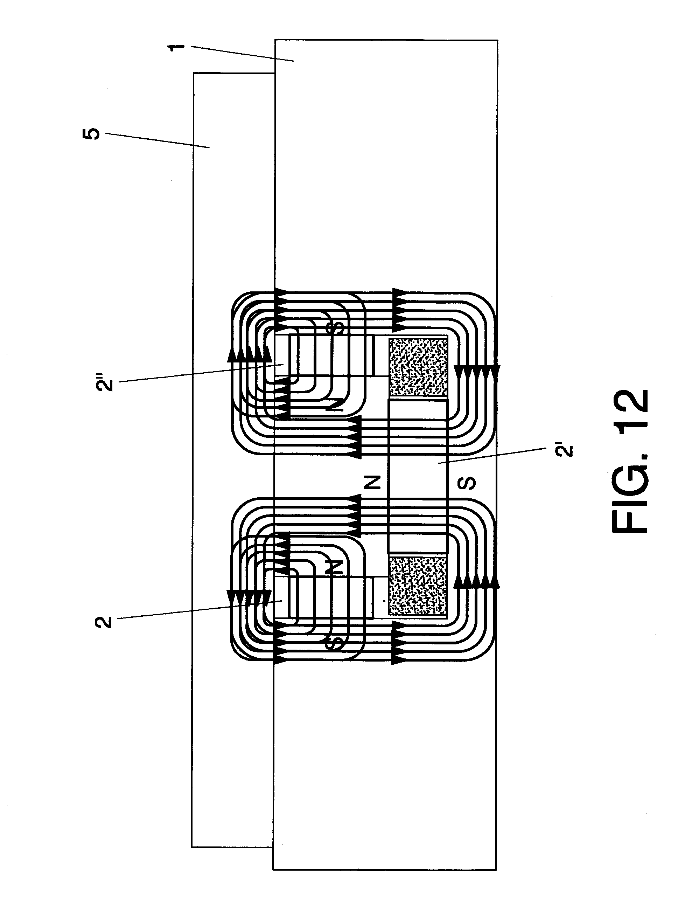

Figures 11 and 12 show a conventional magnetic plate (1) comprising a magnetic generating element, which can consist of neodyn magnets (2, 2") and reversible alnico magnets (2'), configured to generate magnetic flux, in which said magnetic plate (1) has an upper surface (3).

If we apply an electric current to the reversible alnico magnets (2') the polarity of the magnetic generating element (1) changes and the magnetic field comes out through the upper surface (3) of the magnetic plate (1), as can be seen in Figure 12, whereas the magnetic field is confined within the magnetic plate (1) when no electric current is applied.

## Claims

1. Device for fixing parts, **characterized in that** it comprises:
- a magnetic generating element (1), configured to generate magnetic flux (2), having an upper surface (3),
- a container (4) formed by substantially vertical walls, without bottom or lid, tightly secured on the upper surface (3) of the magnetic generating element (1),
- a magneto-rheological fluid (5) having a high yield point located on the upper surface (3) of the magnetic generating element (1) and contained by the container (4) forming a bubble-free layer,
- wherein the magnetic generating element (1) has the capacity to generate a magnetic flux (2) in the magneto-rheological fluid (5) greater than 100 mT.

2. Device for fixing parts according to claim 1, wherein the device is configured to position and fix a part (6) which is partially submersed in the magneto-rheological fluid (5), wherein said part (6) has a lower surface (7) with a configuration coinciding with the upper surface (3) of the magnetic generating element (1), the distance between said lower surface (7) of the part (6) and said upper surface (3) of the magnetic generating element (1) being less than approximately 5 mm.

3. Device for fixing parts according to claim 2, wherein the container (4) is of magnetic material.

4. Device for fixing parts according to any of the previous claims, wherein the container (4) has a geometry in plan view similar to the geometry in plan view of the part (6) to be fixed, the geometry in plan view of the container (4) being larger than the geometry in plan view of the part (6) to be fixed.

5. Device for fixing parts according to claim 4, wherein the geometry in plan view of the container (4) exceeds by no more than 10 mm the geometry in plan view of the part (6) to be fixed.

6. Device for fixing parts according to any of claims 4 and 5, comprising at least one reference mobile element (8) configured to regulate the distance between said lower surface (7) of the part (6) and said upper surface (3) of the magnetic generating element (1).

7. Device for fixing parts according to any of the previous claims, wherein the magnetic generating element (1) has the capacity to generate a plurality of independent magnetic fluxes (2) very close to one another in the magneto-rheological fluid (5), such that said magnetic fluxes (2) are conducted through the magneto-rheological fluid (5) and closed in the magnetic generating element (1).

8. Device for fixing parts according to any of the previous claims, comprising at least one reference mobile positioning element (9) for positioning and orienting the part (6) to be fixed in a predetermined position in the device.

9. Device for fixing parts according to any of the previous claims, wherein the magnetic generating element (1) comprises a fixed plate (10) of non-magnetic material, with a thickness not greater than 2 mm, and a mobile plate (11) of non-magnetic material which has inserted therein a plurality of permanent magnets (12), wherein the upper face of the fixed plate (10) is in contact with the magneto-rheological fluid (5) and the mobile plate (11) is located on at least one hydraulic cylinder (13) capable of moving said mobile plate (11).

10. Device for fixing parts according to any of the previous claims, wherein the magnetic generating element (1) comprises a magnetic flux regulating device (14) capable of concentrate the magnetic flux (2) in an area located below the part (6) to be fixed, the magnetic flux regulating device (14) being capable of changing the direction of the magnetic flux (2) by 90º and allowing a reduction by more than 50% the distance between poles, wherein said magnetic flux regulating device (14) has the capacity to transmit and increase a plurality of independent magnetic fluxes (2) generated by the magnetic generating element (1), conducting through the magneto-rheological fluid (5) and closing them in the magnetic generating element (1).

11. Device for fixing parts according to any of the previous claims, wherein the magneto-rheological fluid (5) has a high yield point such that said magneto-rheological fluid is capable of withstanding stresses under compression loads of an order of 200 kPa and under traction loads of an order of 70 kPa under a magnetic flux (2) of 400 mT.

12. Device for fixing parts according to any of the previous claims, wherein the surface in plan view of the container (4) has a length of the order of meters.

13. Method for fixing parts, **characterized in that** it comprises using a device according to any of the previous claims, comprising:
- arranging a layer of magneto-rheological fluid (5) having a high yield point directly on the upper surface (3) of the magnetic generating element (1) inside the container (4),
- positioning the partially submersed part (6) to be fixed in direct contact with the magneto-rheological fluid (5), preventing bubbles from remaining between the part (6) to be fixed and the magneto-rheological fluid (5), such that the distance between the lower surface (7) of the part (6) and the upper surface (3) of the magnetic, generating element (1) is less than approximately 5 mm, and
- generating a magnetic flux (2) in the magneto-rheological fluid (5) with a value greater than 100 mT.

## Patentansprüche

1. Vorrichtung zum Befestigen von Teilen, **dadurch gekennzeichnet, dass** sie Folgendes aufweist:
- ein Magnetgenerierelement (1), das dazu konfiguriert ist, einen magnetischen Fluss (2) zu erzeugen, und das eine obere Fläche (3) hat,
- einen Behälter (4), der durch im Wesentlichen vertikale Wände ohne Boden oder Deckel gebildet ist und an der oberen Fläche (3) des Magneterzeugungselements (1) fest gesichert ist;
- ein magneto-rheologisches Fluid (5), das einen hohen Fließpunkt hat, das sich an der oberen Fläche (3) des Magneterzeugungselements (1) befindet und im Behälter (4) aufgenommen ist, und das eine blasenfreie Schicht bildet,
- wobei das Magneterzeugungselement (1) eine Fähigkeit hat, einen magnetischen Fluss (2) in dem magnetorheologischen Fluid (5) zu erzeugen, der größer ist als 100 mT.

2. Vorrichtung zum Befestigen von Teilen gemäß Anspruch 1, wobei die Vorrichtung dazu konfiguriert ist, ein Teil (6), das teilweise in dem magneto-rheologischen Fluid (5) eingetaucht ist, zu positionieren und zu befestigen, wobei das Teil (6) eine untere Fläche (7) mit einer Konfiguration hat, die mit der oberen Fläche (3) des Magneterzeugungselements (1) übereinstimmt, wobei der Abstand zwischen der unteren Fläche (7) des Teils (6) und der oberen Fläche (3) des Magneterzeugungselements (1) kleiner als ungefähr 5 mm ist.

3. Vorrichtung zum Befestigen von Teilen gemäß Anspruch 2, wobei der Behälter (4) aus einem magnetischen Material besteht.

4. Vorrichtung zum Befestigen von Teilen gemäß einem der vorherigen Ansprüche, wobei der Behälter (4) eine Geometrie in der Draufsicht hat, die ähnlich der Geometrie in der Draufsicht des zu befestigenden Teiles (6) ist, wobei die Geometrie in der Draufsicht des Behälters (4) größer ist als die Geometrie in der Draufsicht des zu befestigenden Teiles (6).

5. Vorrichtung zum Befestigen von Teilen gemäß Anspruch 4, wobei die Geometrie in der Draufsicht des Behälters (4) die Geometrie in der Draufsicht des zu befestigenden Teiles (6) um nicht mehr als 10 mm überschreitet.

6. Vorrichtung zum Befestigen von Teilen gemäß einem der Ansprüche 4 und 5, zumindest mit einem Referenzmobilelement (8), das dazu konfiguriert ist, den Abstand zwischen der unteren Fläche (7) des Teiles (6) und der oberen Fläche (3) des Magneterzeugungselements (1) zu regulieren.

7. Vorrichtung zum Befestigen von Teilen gemäß einem der vorherigen Ansprüche, wobei das Magneterzeugungselement (1) die Fähigkeit hat, viele unabhängige magnetische Flüsse (2), die eng aneinander sind, in dem magneto-rheologischen Fluid (5) derart zu erzeugen, dass die magnetischen Flüsse (2) durch das magneto-rheologische Fluid (5) geleitet werden und in dem Magneterzeugungselement (1) eingeschlossen sind.

8. Vorrichtung zum Befestigen von Teilen gemäß einem der vorherigen Ansprüche, mit zumindest einem Referenzmobilpositionierelement (9) zum Positionieren und Orientieren des zu befestigenden Teiles (6) an einer vorbestimmten Position in der Vorrichtung.

9. Vorrichtung zum Befestigen von Teilen gemäß einem der vorherigen Ansprüche, wobei das Magneterzeugungselement (1) eine feste Platte (10) aus einem nicht-magnetischen Material mit einer Dicke, die nicht größer als 2 mm ist, und eine mobile Platte (11) aus einem nicht-magnetischen Material aufweist, in der viele Dauermagnete (12) eingefügt sind, wobei die obere Seite der Festplatte (10) mit dem magnetorheologischen Fluid (5) in Kontakt ist und sich die mobile Platte (11) zumindest an einem Hydraulikzylinder (13) befindet, der die mobile Platte (11) bewegen kann.

10. Vorrichtung zum Befestigen von Teilen gemäß einem der vorherigen Ansprüche, wobei das Magneterzeugungselement (1) eine Magnetflussreguliervorrichtung (14) aufweist, die den magnetischen Fluss (2) in einer Fläche konzentrieren kann, die sich unter dem zu befestigenden Teil (6) befindet, wobei die Magnetflussreguliervorrichtung (14) die Richtung des magnetischen Flusses (2) um 90° ändern kann und eine Reduzierung um mehr als 50 % des Abstandes zwischen Polen ermöglicht, wobei die Magnetflussreguliervorrichtung (14) die Fähigkeit hat, viele unabhängige magnetische Flüsse (2) auszusenden und zu verstärken, die durch das Magneterzeugungselement (1) erzeugt werden, und diese durch das magneto-rheologische Fluid (5) zu leiten und diese in das Magneterzeugungselement (1) einzuschließen.

11. Vorrichtung zum Befestigen von Teilen gemäß einem der vorherigen Ansprüche, wobei das magneto-rheologische Fluid (5) einen hohen Fließpunkt derart hat, dass das magneto-rheologische Fluid Beanspruchungen unter Kompressionslasten in einer Größenordnung von 200 kPa und unter Traktionslasten in einer Größenordnung von 70 kPa unter einem magnetischen Fluss (2) von 400 mT standhalten kann.

12. Vorrichtung zum Befestigen von Teilen gemäß einem der vorherigen Ansprüche, wobei die Fläche in der Draufsicht des Behälters (4) eine Länge in der Größenordnung von Metern hat.

13. Verfahren zum Befestigen von Teilen, **dadurch gekennzeichnet, dass** es ein Verwenden einer Vorrichtung gemäß einem der vorherigen Ansprüche aufweist, mit:
- Anordnen einer Schicht eines magneto-rheologischen Fluids (5) mit einem hohen Fließpunkt direkt unter der oberen Fläche (3) des Magneterzeugungselements (1) im Inneren des Behälters (4),
- Positionieren des zu befestigenden, teilweise eingetauchten Teiles (6) in einen direkten Kontakt mit dem magneto-rheologischen Fluid (5), Verhindern, dass Blasen zwischen dem zu befestigenden Teil (6) und dem magneto-rheologischen Fluid (5) verbleiben, so dass der Abstand zwischen der unteren Fläche (7) des Teiles (6) und der oberen Fläche (3) des Magneterzeugungselements (1) kleiner als ungefähr 5 mm ist, und
- Erzeugen eines magnetischen Flusses (2) in dem magnetorheologischen Fluid (5) mit einem Wert, der größer ist als 100 mT.

## Revendications

1. Dispositif pour fixer des pièces, **caractérisé en ce qu'**il comprend :
un élément de génération de flux magnétique (1) configuré pour générer un flux magnétique (2), ayant une surface supérieure (3),
un récipient (4) formé par des parois sensiblement verticales, sans fond ni couvercle, fixé par serrage sur la surface supérieure (3) de l'élément de génération de flux magnétique (1),
un fluide magnéto-rhéologique (5) ayant un seuil de fluage élevé situé sur la surface supérieure (3) de l'élément de génération de flux magnétique (1) et contenu par le récipient (4) formant une couche dépourvue de bulles,
dans lequel l'élément de génération de flux magnétique (1) a la capacité de générer un flux magnétique (2) dans le fluide magnéto-rhéologique (5) supérieur à 100 mT.

2. Dispositif pour fixer des pièces selon la revendication 1, dans lequel le dispositif est configuré pour positionner et fixer une pièce (6) qui est partiellement immergée dans le fluide magnéto-rhéologique (5), dans lequel ladite pièce (6) a une surface inférieure (7) avec une configuration coïncidant avec la surface supérieure (3) de l'élément de génération de flux magnétique (1), la distance entre ladite surface inférieure (7) de la pièce (6) et ladite surface supérieure (3) de l'élément de génération de flux magnétique (1) étant inférieure à approximativement 5 mm.

3. Dispositif pour fixer des pièces selon la revendication 2, dans lequel le récipient (4) est réalisé avec un matériau magnétique.

4. Dispositif pour fixer des pièces selon l'une quelconque des revendications précédentes, dans lequel le récipient (4) a une géométrie en vue en plan similaire à la géométrie en vue en plan de la pièce (6) à fixer, la géométrie en vue en plan du récipient (4) étant plus grande que la géométrie en vue en plan de la pièce (6) à fixer.

5. Dispositif pour fixer des pièces selon la revendication 4, dans lequel la géométrie en vue en plan du récipient (4) dépasse d'une valeur non supérieure à 10 mm la géométrie en vue en plan de la pièce (6) à fixer.

6. Dispositif pour fixer des pièces selon l'une quelconque des revendications 4 et 5, comprenant au moins un élément mobile de référence (8) configuré pour réguler la distance entre ladite surface inférieure (7) de la pièce (6) et ladite surface supérieure (3) de l'élément de génération de flux magnétique (1).

7. Dispositif pour fixer des pièces selon l'une quelconque des revendications précédentes, dans lequel l'élément de génération de flux magnétique (1) a la capacité de générer une pluralité de flux magnétiques (2) indépendants très proches les uns des autres dans le fluide magnéto-rhéologique (5), de sorte que lesdits flux magnétiques (2) sont conduits par le biais du fluide magnéto-rhéologique (5) et fermés dans l'élément de génération de flux magnétique (1).

8. Dispositif pour fixer des pièces selon l'une quelconque des revendications précédentes, comprenant au moins un élément de positionnement mobile de référence (9) pour positionner et orienter la pièce (6) à fixer dans une position prédéterminée dans le dispositif.

9. Dispositif pour fixer des pièces selon l'une quelconque des revendications précédentes, dans lequel l'élément de génération de flux magnétique (1) comprend une plaque fixe (10) en matériau non magnétique, avec une épaisseur non supérieure à 2 mm et une plaque mobile (11) en matériau non magnétique qui a, insérés à l'intérieur de cette dernière, une pluralité d'aimants permanents (12), dans lequel la face supérieure de la plaque fixe (10) est en contact avec le fluide magnéto-rhéologique (5) et la plaque mobile (11) est positionnée sur au moins un vérin hydraulique (13) pouvant déplacer ladite plaque mobile (11).

10. Dispositif pour fixer des pièces selon l'une quelconque des revendications précédentes, dans lequel l'élément de génération de flux magnétique (1) comprend un dispositif de régulation de flux magnétique (14) pouvant concentrer le flux magnétique (2) dans une zone située au-dessous de la pièce (6) à fixer, le dispositif de régulation de flux magnétique (14) pouvant changer la direction du flux magnétique (2) de 90° et permettant une réduction de plus de 50% de la distance entre les pôles, dans lequel ledit dispositif de régulation de flux magnétique (14) a la capacité de transmettre et d'augmenter une pluralité de flux magnétiques (2) indépendants générés par l'élément de génération de flux magnétique (1), les conduisant par le biais du fluide magnéto-rhéologique (5) et les fermant dans l'élément de génération de flux magnétique (1).

11. Dispositif pour fixer des pièces selon l'une quelconque des revendications précédentes, dans lequel le fluide magnéto-rhéologique (5) a un seuil de fluage élevé de sorte que ledit fluide magnéto-rhéologique peut résister aux tensions sous des charges de compression de l'ordre de 200 kPa et sous des charges de traction de l'ordre de 70 kPa sous un flux magnétique (2) de 400 mT.

12. Dispositif pour fixer des pièces selon l'une quelconque des revendications précédentes, dans lequel la surface en vue en plan du récipient (4) a une longueur de l'ordre des mètres.

13. Procédé pour fixer des pièces, **caractérisé en ce qu'**il comprend l'étape consistant à utiliser un dispositif selon l'une quelconque des revendications précédentes, comprenant les étapes consistant à :
agencer une couche de fluide magnéto-rhéologique (5) ayant un seuil de fluage élevé directement sur la surface supérieure (3) de l'élément de génération de flux magnétique (1) à l'intérieur du récipient (4),
positionner la pièce (6) à fixer partiellement immergée en contact direct avec le fluide magnéto-rhéologique (5), empêchant les bulles de rester entre la pièce (6) à fixer et le fluide magnéto-rhéologique (5), de sorte que la distance entre la surface inférieure (7) de la pièce (6) et la surface supérieure (3) de l'élément de génération de flux magnétique (1) est inférieure à approximativement 5 mm, et
générer un flux magnétique (2) dans le fluide magnéto-rhéologique (5) avec une valeur supérieure à 100 mT.
